**Europäisches Patentamt**

(19) **European Patent Office**

**Office européen des brevets**

(11) Publication number : **0 181 396 B2**

## (12) NEW EUROPEAN PATENT SPECIFICATION

(45) Date of publication of the new patent specification : **14.10.92 Bulletin 92/42**

(51) Int. Cl.[5] : **C08K 7/02,** C08J 5/04, C08L 23/06, C08L 27/18

(21) Application number : **85903450.6**

(22) Date of filing : **08.04.85**

(86) International application number : **PCT/US85/00612**

(87) International publication number : **WO 85/04887 07.11.85 Gazette 85/24**

(54) **FIBER-REINFORCED COMPOSITE AND METHOD OF MAKING SAME.**

(30) Priority : **16.04.84 US 600621**
**16.04.84 US 600690**

(43) Date of publication of application : **21.05.86 Bulletin 86/21**

(45) Publication of the grant of the patent : **14.06.89 Bulletin 89/24**

(45) Mention of the opposition decision : **14.10.92 Bulletin 92/42**

(84) Designated Contracting States :
**CH DE FR GB IT LI NL SE**

(56) References cited :
**DE-A- 1 494 084**
**DE-A- 1 529 954**
**DE-A-22 246 14**
**GB-A- 1 010 043**
**GB-A- 2 014 158**
**US-A- 2 440 190**
**US-A- 3 422 057**

(56) References cited :
**Chemical Abstracts, vol. 86, no. 24, 13 June 1977, Columbus, Ohio, (US), P. Walker et al.: "Variables affecting polymer wearin artificial human joints", p. 376, abstract 177281u**
**Kirk Othmer, Encyclop. of Chem. Techn., Vol.9, 2. Ed.(1966), pp. 812, 817 and 818**

(73) Proprietor : **Hughes Aircraft Company**
**7200 Hughes Terrace P.O. Box 45066**
**Los Angeles, California 90045-0066 (US)**

(72) Inventor : **ROSSER, Robin, W.**
**1208 D California**
**Santa Monica, CA 90403 (US)**
Inventor : **TEDESCO, James, S.**
**1066 Monterey Boulevard C**
**Hermosa Beach, CA 90254 (US)**
Inventor : **SEIBOLD, Robert, W.**
**11841 Kiowa Avenue 3**
**Los Angeles, CA 90049 (US)**
Inventor : **MILEWSKI, John, V.**
**156 Monte Rey Drive South**
**Los Alamos, NM 87544 (US)**

(74) Representative : **KUHNEN, WACKER & PARTNER**
**Alois-Steinecker-Strasse 22 Postfach 1553**
**W-8050 Freising (DE)**

EP 0 181 396 B2

## Description

### Background of the invention

#### 1. Field of the invention

This invention relates, generally, to the use of a solid-solid composite material comprising a polymer and fibers, and, more particularly, to the use of a composite material formed of an ultra-high molecular weight polymer reinforced with relatively long fibers having lengths in excess of 0.05 inch (1270 micrometers), and which is self-lubricating and has good wear resistance and creep resistance.

#### 2. Description of the prior art

Blends of tetrafluoroethylene copolymers and graphite reinforcing fibres are described in GB-A-2 014 158. The fluorocarbon resins are, however, of the melt-fabricable type and have much lower melt viscosity than tetrafluoroethylene-homopolymers.

Ultra-high molecular weight polymers generally have a molecular weight in excess of $1.0 \times 10^6$. Polyethylene and polytetrafluoroethylene are typical ultrahigh molecular weight materials. These materials are self-lubricating in nature. However, because of their ultra-high molecular weight, these materials also have low-flow properties, which makes them difficult to mix with reinforcing fibers. In addition, mixtures of these ultra-high molecular weight polymers with fibers cannot be molded by conventional techniques, other than sintering and/or compression molding, without suffering degradation caused by reduction in the molecular weight of the material. Currently, it is the practice to reinforce such materials during extrusion with powders and very short fibers, such as glass, having diameters of about 10 micrometers ($\mu$m) and aspect ratios (i.e., length to diameter ratio) of about 1 to 10. Although such materials have many useful applications, they are not suitable for use in some aerospace applications where the extreme conditions of use require more highly specialized materials. An example of the need for such specialized materials is for piston ring seals for cryogenic refrigeration equipment to be used in space. These piston rings must be generally of a self-lubricating nature and exhibit low wear rates over long periods of time so that there will not be any loss of sealing performance. However, existing materials containing glass fibers generate abrasive debris, which accelerates wear processes and is undesirable.

It is a particular purpose of this invention to provide a fiber-reinforced polymer which is used to form a piston ring seal that will be able to withstand the extreme conditions of space, exhibit low wear, and be of a non-abrasive nature.

### Summary of the invention

We have invented the use of a new composite material which comprises a polymer reinforced with fibers, and exhibits low wear and low creep and has low abrasive characteristics. The use of a composite material comprising a solid polymer matrix having randomly dispersed therein reinforcing fibers of lengths greater than 1270 micrometers (0.05 inch) and having an aspect ratio within the range of 100:1 to 300:1 and the fibers are made of an organic polymer and is characterized in the polymer being selected from polyethylene and polytetrafluoroethylene and having a molecular weight in excess of $1.0 \times 10^6$ and the fibers are suspended within the polymer matrix, are randomly oriented and are mechanically interlocked to form an essentially two-dimensional network extending throughout the polymer matrix to form a piston ring seal for use in aerospace applications is claimed.

The composites used according to this invention are prepared by a method, which comprises the steps of:

a) providing the ultra-high molecular weight polymer in the form of particles of predetermined size;

b) providing an inert liquid carrier capable of uniformly dispersing the fibers and the particles of the polymers;

c) blending the fibers and particles of the polymer in the inert liquid carrier to form a uniform dispersion;

d) passing the dispersion through a filter so that there is collected on the filter an intermediate structure comprising a network of quasi-isotropic fibers oriented randomly and intermingled, with the particles of polymer dispersed throughout the free volume space between the fibers in the network;

e) drying the intermediate structure to remove excess liquid carrier therefrom;

f) applying positive pressure to the intermediate structure at ambient temperature to remove entrapped air and to compact the intermediate structure;

g) compressing the compacted intermediate structure in a mold at an elevated temperature at which the polymer matrix melts, but the fibers do not melt, to form upon cooling a fiber-reinforced solid polymer composite comprising a continuous polymer matrix reinforced by a network of nearly planar fibers oriented randomly and intermingled in two dimensions.

### Brief description of the drawings

Fig. 1 is a perspective view of the intermediate structure formed prior to the formation of the compressed solid composite product.

Fig. 2 is a magnified schematic representation of a portion of the structure shown in Fig. 1.

Fig. 3 is a schematic view of one suitable apparatus for carrying out one step of the method.

Fig. 4 is a magnified schematic view of a portion of the structure of Fig. 1 after compaction, with the spheres shown in Fig. 2 now forming a continuous matrix around the fibers.

Fig. 5 is a perspective view of the final compressed composite product made in the form of a disk.

Fig. 6 is a perspective view of an annular member formed from the composite material.

Detailed description of the invention

The polymer used to form the composite used in the present invention has a molecular weight in excess of $1.0 \times 10^6$ and is either polyethylene, or polytetrafluoroethylene. An example of a low-flow polymer is polytetrafluoroethylene, which has a melt viscosity of about $10^{10}$ Pa·s ($10^{11}$ poise) at its melting temperature of 700°F (371°C). Such materials are of a self-lubricating nature and are generally non-abrasive. However, additional lubricating materials and pigments may be added to these polymers. For example, molybdenum disulfide or graphite powders are suitable lubricants for many applications. It is desirable that the polymer be provided in a particulate state with the size of the particles selected so that they will neither clog the filter employed for filtration nor pass through the filter during the process steps discussed herein.

The fibers used to form the composite used in the present invention must be able to withstand the melt temperature for the ultra-high molecular weight polymer matrix without losing their fibrous nature. For use in self-lubricating applications, such fibers are made of an organic polymer which exhibits non-abrasive characteristics. Suitable polymers are, for example, Kevlar® or Nomex®, aromatic polyamide materials, both manufactured by E. I. Dupont and Company.

The length of the fibers used in the present invention falls within the following limits: (a) the fibers are not so long that they become tangled into clumps during the wet blending process described herein; and (b) the fibers are not so short that they approximate the behavior of particles which can be more readily mixed with the ultra-high molecular weight polymer by conventional techniques, such as ball milling. With regard to the former limit, it should be noted that the length at which such tangling occurs depends also on the diameter of the fiber and the concentration of the fiber in the suspension. The length is in excess of 0.05 inch (1270 micrometers), with lengths of about one-eighth inch (3175 micrometers) being particularly effective.

The preferred method of blending the fibers with the polymer is to disperse them in an inert liquid carrier using, for example, a shearing action provided by a Waring blender employing a flat disk type blade. Typically, a mixture of such fibers and polymer ranges between 5 and 60% by weight fibers and between 40 and 95% by weight polymer; and preferably between 5 and 15% fibers and between 85 and 95% polymer. This mixture of fibers and polymer comprises no more than about 3 percent of the blend of carrier liquid and fiber/polymer. The inert liquid carrier should wet the polymer and fiber materials to provide a good suspension of these materials and should be easily removed by drying. One suitable liquid carrier for polyethylene is a mixture of isopropyl alcohol and water, comprising two parts by volume of alcohol to one part of water. Other known carriers may be used depending on the particular polymer and fiber components used. The combination of the polymer particle size, fiber size, and liquid carrier is chosen to provide a good dispersion of the solids in the liquid carrier. Properties of these materials which affect this dispersion are viscosity, surface tension, density, length, aspect ratio, and particle size. If good dispersion of the solids in the carrier is not achieved, then the polymer and fiber materials will, upon filtration, form separate layers.

As the liquid suspension of polymer particles and fibers is drawn through the filter in accordance with the above mentioned method the fibers orient themselves in a random fashion on the filter pad, generally intermingled in a quasi-isotropic or nearly three-dimensional network. The particles of polymer are dispersed throughout the free volume space between this fiber network and are held in place mechanically. After filtration, the network of fibers and polymer is dried, typically at approximately 150°F (66°C) for two hours or more in a vacuum, preferably at about 2.67 kPa (20 millimeters of mercury) or better, and then compacted under pressure at ambient temperature to form a compacted preform. The compaction step serves to remove entrapped air, as well as to produce interpenetration of the polymer particles with each other on a macroscopic level, to form a continuous polymer matrix on a macroscopic level. When the compacted preform is then further compressed in a mold and simultaneously subjected to heat, the polymer melts and, upon cooling, fuses to bind the fibers together in the polymer matrix. The final product has the shape of the mold. During this final step when the polymer particles melt, an interpenetration of the molecular chains of the polymer particles occurs in a microscopic level to produce a continuous polymer matrix on a microscopic level.

In accordance with conventional practice, when powders and short fibers are dispersed throughout the polymer, they provide a material which does not have the desired wear resistance. This is evidenced by the filler being pulled from the rubbing surface of the material, leaving small pit marks in this surface. However, when randomly oriented long fibers are employed in accordance with the present invention, this filler-pulling does not occur. The fibers will wear away slowly, but will not be pulled from the composite material. The high aspect ratio of the fibers used in the present invention provides both increased surface inter-action with the polymer matrix and increased inter-fiber mechanical locking. The energy necessary to pull out such long fibers is much larger than that required to pull out conventionally used chopped fibers. Thus, both the high aspect ratio and the mechanical interlocking of the fibers used in the present invention prevent these fibers from being removed from the polymer matrix during wear, despite low bond strengths typically encountered between fibers and the ultra-high molecular weight polymers previously discussed. Consequently, the composite material using long fibers exhibits low wear and does not generate abrasive debris. In addition, the non-abrasive nature of certain polymer fibers which may be used in the present invention further adds to the low abrasiveness of the composite material used in the present invention.

The advantages of the composite used in the present invention are apparent from the previous description. This composite material is self-lubricating and has low wear, low creep and low abrasiveness. It is formed into a piston ring seal for aerospace applications.

The features of the present invention can further be understood, together with the advantages discussed above and other advantages, by reference to the following description taken in connection with the drawings.

A mass of discontinuous fibers, such as Kevlar® is used as one of the starting materials to make the composite used in this invention. These fibers are chopped and have an aspect ratio of about 250:1 and are generally of approximately 1/8 inch (3175 micrometers) in length and about 12 micrometers in diameter. These fibers cannot ordinarily be adequately blended with ultra-high molecular weight materials in an extruder. We have discovered, however, that these fibers can be blended with particles of, for example, an ultra-high molecular weight polyethylene polymer manufactured by Hercules Corporation and sold under the trade name 1900 UHMW polymer. This particular polymer generally has a molecular weight ranging between about $2 \times 10^6$ and about $6 \times 10^6$ and a particle size of about 300 micrometers in diameter.

By mixing the fibers with the 1900 UHMW polymer in an isopropyl alcohol/water mixture and dispersing the fibers and the polymers by a shearing means, such as a Waring blender using a disk type blade, there is formed a dispersion of fibers and polymers in liquid which will, upon filtration, form the intermediate structure 10 shown in Fig. 1 and comprising a fiber network/ polymer mixture. Fig. 2 presents a magnified schematic view of a portion of the intermediate structure 10 of Fig. 1, comprising the fibers 11 which are oriented in a quasi-isotropic or nearly three-dimensional network, with the particles 12 of polymer dispersed throughout the spaces between the fibers and mechanically held in place within the fiber network. It should be noted that Fig. 2 is of a schematic nature and illustrates only the general orientation of the fibers and polymer particles. However, this figure is not to scale and does not show the actual aspect ratio of the fibers used in the present invention and the relative size of the polymer particles, which dimensions may be readily determined from the disclosure herein.

In order to accomplish the above mentioned, a laboratory apparatus such as that shown in Fig. 3 may be used. As illustrated in Fig. 3, the dispersion or blend 13 of polymer particles and fibers is contained within a beaker 14 and is drawn through a Buechner funnel 16 having a 40/60 weave screen 18 carried in its base which serves as a filter. A cylindrical adapter 20 is used to draw the dispersion of materials from the beaker 14 into the funnel 16 when vacuum is applied. A tube 21 connects the exit end of the funnel 16 to a conventional Erlenmeyer flask 22, passing through a plug 23. A port 24 in the flask 22 is connected to a vacuum-producing means (not shown), such as a small capacity laboratory pump. The vacuum produced forces the dispersion 13 of materials in the beaker 14 up into the filter 18, with the liquid being drawn through the tube 21 and directed into the base of the flask 22. As the fibers are drawn into the funnel 16, they assume the quasi-isotropic orientation illustrated in Fig. 2, with the polymer particles 12 caught between the fibers 11, to form the intermediate structure 10 shown in Fig. 1. In addition, the filtered mixture assumes the shape of the filtering surface and surrounding structure. This intermediate structure 10 is removed from the filter and dried under vacuum at an elevated temperature and for a period of time sufficient to remove moisture and excess carrier liquid (e.g. 150°F or 66°C for two hours at 2.67 kPa (20 millimeters of mercury) for an isopropyl alcohol/water carrier liquid and 1900 UHMW polymer). The dried mixture is compacted at ambient temperature under pressure, such as 5,000 pounds per square inch (34 MPa), to remove entrapped air. Fig. 4 presents a magnified schematic view of a portion of the compacted mixture, comprising the fibers 11 which are intertwined and oriented in an essentially two-dimensional network, with a continuous matrix of polymer (not illustrated) dispersed throughout the spaces between the fibers. As previously discussed, the continuous polymer matrix is formed during compaction by the interpenetration of the polymer particles with each other on a macroscopic level. As discussed with respect to Fig. 2, Fig. 4 is also of a schematic nature only and not to scale.

Finally, the compacted mixture is compressed at 34 MPa (5000 psi), for example, in a mold of the desired shape, and heated at or above the fusion/ melting temperature of the specific polymer used (e.g. 400°F or 204°C for 1900 UHMW polymer), and then cooled so that the polymer particles are fused together and bind the unmelted fibers together in the polymer. The specific time, temperature, and pressure required for the process steps described herein depend upon the particular polymer used in the matrix. The resulting product may be in the form of a disk 28 which is illustrated in Fig. 5, and comprises a continuous polymer matrix reinforced by a network of high-aspect-ratio fibers randomly oriented primarily in two dimensions and mechanically entwined and interlocked. Such a structure has inherent multi-directional structural properties due to the high degree of fiber entanglement. Thus, the fiber network restricts movement of the resin matrix with little or no stress transfer at the fiber/matrix interfaces. By minimizing the need for a strong fiber/matrix bond, the present method enables the use of combinations of fibers and polymers to produce composite materials and structures according to the claims. In addition, this process enables low- or non-flow polymers to be used as the matrix. Further, the polymer/fiber composite used in the present invention possesses the self-lubricating, low-friction properties of the polymer material, as well as increased wear resistance and creep resistance due to the fiber network structure discussed above.

From this disk 28 of Fig. 5 is made an annular member 30, as shown in Fig. 6, by machining out the central portion of the disk 28. The edges of the member 30 may be rendered smooth by placing the ring in a suitable die and compressing it at an elevated temperature of, for example, 350°F (177°C).

In addition, the suspension may be filtered into a structure having a different geometry than that illustrated herein to form a structure other than a disk.

Example 1

A composite material was formed in accordance with the present invention as described herein in detail using ultra high molecular weight polyethylene (1900 UHMW polymer) and Kevlar fibers in an alcohol/water carrier.

A mixture was prepared from 6.8 grams of 1900 UHMW polymer having a molecular weight of $2\times10^6$ to $6\times10^6$ and a particle size of about 300 micrometers in diameter, and 1.2 grams of chopped Kevlar® fibers having lengths of 1/8 inch (3175 micrometers), an aspect ratio of about 250:1, and a diameter of about 12 micrometers, in 300 ml, of a 2:1 mixture of isopropyl alcohol and water. The mixture was blended in a Waring blender using a flat disk type blade for 2 minutes. Using the apparatus discribed in Fig. 3, the dispersion of fibers and polymer in the liquid carrier was placed in the beaker 13. A vacuum of about 20 inches of mercury ($67.7\times10^3$ pascals) was drawn on the dispersion for about 20 seconds until all of the dispersion had been drawn up from the beaker 13. After filtration, the mixture which had collected on the wire mesh was dried at 150°F (66°C) for 2 hours under a vacuum of 20 inches of mercury ($67.7\times10^3$ Pa). The dried material was then compressed at ambient temperature at 5000 pounds per square inch ($34\times10^6$ Pa) for 5 minutes to form a compacted preform. Then the preform was placed in a mold which was heated to and maintained at a temperature of 400°F (204°C). Contact pressure was applied to the mold, and the mold was then cooled at a rate of 10°F/minute (6°C/minute) down to ambient temperature. Pressure was applied slowly as the mold and preform cooled. A maximum pressure of 5000 psi ($34\times10^6$ Pa) was reached by the time the material had cooled to 200°F (93°C), which was 20 minutes after the cooling was started. The molded product was then removed from the mold. The final product was in the form of a disk, as shown in Fig.5.

The disk of final product was tested for wear resistance by rubbing the disk against a stainless steel countersurface at about 190 pounds per square inch ($1.3\times10^6$ Pa) pressure and a rubbing speed of 17 feet per minute (5.2 m/minute), and was found to wear at a comparable rate to neat ultra-high molecular weight polyethylene. In addition, this product was tested for creep properties by compressing it at 3000 psi ($21\times10^6$ Pa) at 150°F (66°C) for 24 hours with the load applied perpendicular to the structure tested. Under these test conditions, a 0.5 inch (1.27 cm) cube of neat polyethylene deformed 0.16 inch (0.41 cm), as contrasted to the composite material of the present invention which deformed only 0.011 inch (0.027 cm). Further since the product comprises polymeric fibers which are softer than glass reinforcing materials conventionally used, the product used in this invention has improved nonabrasive properties as compared to many conventional composites.

Example 2

A composite material may be formed in accordance with the present invention as set forth in Example 1, except using polytetrafluoroethylene (PTFE) as the ultra-high molecular weight material. Since PTFE is more dense than ultra-high molecular weight polyethylene, the combination of polymer particle size, fiber size, and liquid carrier is adjusted so that a good dispersion of these materials is formed, as previously described.

Claims

1. The use of a composite material comprising a solid polymer matrix having randomly dispersed therein reinforcing fibers of lengths greater than 1270 micrometers (0.05 inch) and having an aspect ratio within the range of 100:1 to 300:1, characterized in the polymer being selected from polyethylene and polytetrafluoroethylene and having a molecular weight in excess of $1.0 \times 10^6$ and the fibers are made of an organic polymer and are randomly oriented and are mechanically interlocked to form a essentially two-dimensional network extending throughout the polymer matrix to form a piston ring seal for use in aerospace applications.

2. The use of claim 1, wherein the fibers are made of an aromatic polyamide material.

3. The use of claim 1 and/or 2, wherein the mixture of fibers and polymer ranges between 5 and 15 percent by weight fiber and between 85 and 95 percent by weight polymer.

4. The use of any of claims 1-3, wherein:
   a) said polymer is polyethylene having a molecular weight in the range of $2 \times 10^6$ to $6 \times 10^6$ and a particle size of about 300 micrometers in diameter; and
   b) said fibers are formed of an aromatic polyamide material and have lengths of about 3175 micrometers and as aspect ratio of about 250:1.

5. A piston ring seal formed according to any of claims 1-4.

**Patentansprüche**

1. Die Verwendung eines zusammengesetzten Materials, das eine feste Polymermatrix mit darin zufällig verteilten verstärkenden Fasern von Längen über 1270 μm (0,05 inch) und ein Streckungsverhältnis innerhalb des Bereichs von 100:1 bis 300:1 besitzt, dadurch gekennzeichnet, daß das Polymer ausgewählt ist aus Polyethylen und Polytetrafluorethylen und ein Molekulargewicht über $1,0 \times 10^6$ besitzt und daß die Fasern aus einem organischen Polymer gemacht sind und zufällig ausgerichtet sind und mechanisch verblockt sind unter Bildung eines im wesentlichen zweidimensionalen Netzwerks, das sich durch die Polymermatrix hindurch erstreckt, zur Bildung einer Kolbenringdichtung zur Verwendung in der Raumfahrt.

2. Die Verwendung nach Anspruch 1, wobei die Fasern aus einem aromatischen Polyamidmaterial gemacht sind.

3. Die Verwendung nach Anspruch 1 und/oder 2, wobei die Mischung aus Fasern und Polymer im Bereich zwischen 5 und 15 Gew.-% Fasern und zwischen 85 und 95 Gew.-% Polymer liegt.

4. Die Verwendung nach einem der Ansprüche 1 bis 3, wobei:
   a) das Polymer Polyethylen mit einem Molekulargewicht im Bereich von $2 \times 10^6$ bis $6 \times 10^6$ und einer Teilchengröße von etwa 300 μm Durchmesser ist; und
   b) die Fasern aus einem aromatischen Polyamidmaterial gebildet sind und Längen von etwa 3175 μm und ein Streckungsverhältnis von etwa 250:1 besitzen.

5. Eine Kolbenringdichtung, hergestellt nach einem der Ansprüche 1 bis 4.

**Revendications**

1. Utilisation d'un matériau composite comprenant une matrice en polymère solide dans laquelle sont dispersées de façon aléatoire des fibres de renforcement ayant des longueurs supérieures à 1270 micromètres (0,05 inch) et ayant un rapport d'aspect dans la plage de 100:1 à 300:1, caractérisée en ce que le polymère est choisi entre du polyéthylène et du polytétrafluoréthylène et possède un poids moléculaire supérieur à $1,0 \times 10^6$ et les fibres sont constituées d'un polymère organique et sont orientées de façon aléatoire et sont en blocage mécanique mutuel pour former un réseau essentiellement bidimensionnel s'étendant à travers la matrice de polymère afin de former un segment de piston à utiliser dans des applications aérospatiales.

2. Utilisation selon la revendication 1, dans laquelle les fibres sont constituées d'une matière du type polyamide aromatique.

3. Utilisation selon la revendication 1 et/ou 2, dans laquelle le mélange de fibres et de polymère est compris entre 5 et 15 % en poids de fibres et entre 85 et 95 % en poids de polymère.

4. Utilisation selon l'une quelconque des revendications 1 à 3, dans laquelle :
   a) ledit polymère est un polyéthylène ayant un poids moléculaire compris dans la plage de $2 \times 10^6$ à $6 \times 10^6$ et une dimension de particules d'environ 300 micromètres en diamètre ; et
   b) lesdites fibres sont formées d'une matière du type polyamide aromatique et ont des longueurs d'environ 3175 micromètres et un rapport d'aspect d'environ 250:1.

5. Segment de piston formé selon l'une quelconque des revendications 1-4.